# FASCICULE DE BREVET EUROPEEN

(11) **EP 2 901 370 B1**
(45) Date de publication et mention de la délivrance du brevet: **06.07.2016**
(21) Numéro de dépôt: 14731644.2
(22) Date de dépôt: 20.06.2014
(51) Int. Cl.: G06K 9/00, G06K 9/20

(54) **PROCÉDÉ DE DÉTECTION D'UN VRAI VISAGE**
VERFAHREN ZUR ERKENNUNG EINES REALEN GESICHTS
METHOD FOR DETECTING A REAL FACE

(30) Priorité: 25.06.2013 FR 1356033
(43) Date de publication de la demande: 05.08.2015
(73) Titulaire: Morpho, 92130 Issy-les-Moulineaux (FR)
(72) Inventeur: THIEBOT, Alain, 92130 Issy Les Moulineaux (FR); PEYRONNEAUD, Benjamin, 92130 Issy Les Moulineaux (FR); THOUY, Benoît, 92130 Issy Les Moulineaux (FR); GUILLEMOT, Florence, 92130 Issy Les Moulineaux (FR); MONTEILLIET, Gilles, 92130 Issy Les Moulineaux (FR)
(74) Mandataire: Le Guen-Maillet
(86) Numéro de dépôt international: PCT/EP2014/063038
(87) Numéro de publication internationale: WO 2014/206887

(56) Documents cités:
- WO-A2-2008/108871
- US-A1- 2011 163 163
- CHEN G Y ET AL: "Invariant pattern recognition using radon, dual-tree complex wavelet and Fourier transforms", PATTERN RECOGNITION, ELSEVIER, GB, vol. 42, no. 9, 1 septembre 2009 (2009-09-01), pages 2013-2019, XP026148589, ISSN: 0031-3203, DOI: 10.1016/J.PATCOG.2008.10.008 [extrait le 2008-11-01]
- HONMA M ET AL: "LIQUID CRYSTAL POLARIZATION-CONVERTING DEVICES FOR EDGE AND CORNER EXTRACTIONS OF IMAGES USING OPTICAL WAVELET TRANSFORMS", APPLIED OPTICS, OPTICAL SOCIETY OF AMERICA, WASHINGTON, DC; US, vol. 45, no. 13, 1 mai 2006 (2006-05-01), pages 3083-3090, XP001242697, ISSN: 0003-6935, DOI: 10.1364/AO.45.003083
- LAI J H ET AL: "Face recognition using holistic Fourier invariant features", PATTERN RECOGNITION, ELSEVIER, GB, vol. 34, no. 1, 1 janvier 2001 (2001-01-01), pages 95-109, XP004321249, ISSN: 0031-3203, DOI: 10.1016/S0031-3203(99)00200-9
- CHE-HUA YEH ET AL: "Personalized photograph ranking and selection system", PROCEEDINGS OF THE INTERNATIONAL CONFERENCE ON MULTIMEDIA, MM '10, 1 janvier 2010 (2010-01-01), page 211, XP055094029, New York, New York, USA DOI: 10.1145/1873951.1873963 ISBN: 978-1-60-558933-6
- YI LIU ET AL: "Curvelet based image reconstruction", SIGNAL PROCESSING, 2008. ICSP 2008. 9TH INTERNATIONAL CONFERENCE ON, IEEE, PISCATAWAY, NJ, USA, 26 octobre 2008 (2008-10-26), pages 1035-1038, XP031369226, ISBN: 978-1-4244-2178-7

## Description

La présente invention concerne un procédé de détection d'un vrai visage, ainsi qu'un dispositif de détection d'un vrai visage mettant en oeuvre un tel procédé de détection.

Elle trouve application dans le domaine de la reconnaissance biométrique et en particulier dans le domaine de l'identification et l'authentification par reconnaissance de visages.

La reconnaissance d'un visage est utilisée par exemple pour sécuriser des installations et permet de s'affranchir de codes d'accès ou de cartes qui peuvent être volés ou falsifiés. L'utilisation de cette technologie permet de renforcer la sécurité dans la mesure où la probabilité que deux personnes aient deux visages identiques est réduite.

La reconnaissance du visage est basée sur la comparaison d'un modèle ("Template" en Anglais) issu de l'image du visage de l'utilisateur avec un ensemble de modèles issus d'images de visage de référence stockées dans une base de données.

Bien que le piratage des dispositifs de reconnaissance de visage soit difficile, il n'est pas impossible.

En effet, certains pirates réalisent des leurres, comme par exemple une photo ou un masque sur lequel est reproduit le visage à imiter. Le pirate peut alors placer le leurre devant le dispositif d'acquisition du dispositif de reconnaissance de visages qui est alors trompé.

Un objet de la présente invention est de proposer un dispositif de détection d'un vrai visage qui ne présente pas les inconvénients de l'art antérieur.

A cet effet, est proposé un procédé de détection d'un vrai visage par un dispositif de détection comportant au moins un moyen d'éclairement émettant un flux infrarouge polarisé selon une direction de polarisation, une caméra présentant un filtre polarisant orthogonalement à la direction de polarisation et une caméra présentant un filtre polarisant parallèlement à la direction de polarisation, une lame séparatrice placée entre le visage et les deux caméras et destinée à diviser le flux lumineux provenant du visage en un flux lumineux capté par la caméra et un flux lumineux capté par la caméra, une unité de traitement et une base de données contenant, pour chaque zone de visage, un modèle de vérité basé sur des valeurs de caractéristique de texture de référence, sur des valeurs de coefficients 'b' de référence et sur des corrélations entre ces éléments, ledit procédé de détection comportant:
- une étape de capture au cours de laquelle une image parallèle du visage éclairée par le moyen d'éclairement est capturée par la caméra, et une image orthogonale du visage éclairée par le moyen d'éclairement est capturée par la caméra,
- une étape de différence au cours de laquelle l'unité de traitement calcule une image de différence résultant de la différence entre l'image parallèle et l'image orthogonale ainsi capturées,
- une étape de filtrage au cours de laquelle l'unité de traitement génère une image dite filtrée en filtrant ladite image de différence par paquets d'ondelettes sur 5 niveaux, en supprimant les niveaux "low" résolution, 1 et 5,
- une étape de découpage au cours de laquelle l'unité de traitement découpe l'image ainsi filtrée en trois sous-images filtrées, la première correspondant au front, la deuxième correspondant au nez et la troisième correspondant aux joues,
- une étape de traitement au cours de laquelle l'unité de traitement soumet l'image filtrée et chacune des sous-images filtrées à un traitement consistant en:
   ∘ une transformation de Fourier ou une transformée en cosinus discrète en projection cumulative radiale, en sommant les énergies appartenant à la même couronne fréquentielle, dans le but de définir un profil de décroissance des fréquences, et
   ∘ une modélisation au cours de laquelle le profil de décroissance des fréquences est modélisé sous la forme d'un modèle de type puissance (a.x^b+c),
- une étape d'extraction au cours de laquelle l'unité de traitement extrait de l'image filtrée et de chacune des sous-images filtrées, des caractéristiques de texture relatives aux spécularités de la surface du visage,
- une étape d'analyse au cours de laquelle l'unité de traitement analyse, pour chaque zone du visage, le coefficient 'b' ainsi calculé et les caractéristiques de texture ainsi extraites par rapport au modèle de vérité correspondant à ladite zone du visage, et
- une étape de prise de décision au cours de laquelle l'unité de traitement prend une décision concernant la véracité du visage à partir du résultat de l'étape d'analyse.

L'invention propose également un dispositif de détection comportant:
- au moins un moyen d'éclairement émettant un flux infrarouge polarisé selon une direction de polarisation,
- une caméra présentant un filtre polarisant orthogonalement à la direction de polarisation,
- une caméra présentant un filtre polarisant parallèlement à la direction de polarisation,
- une lame séparatrice placée entre le visage et les deux caméras et destinée à diviser le flux lumineux provenant du visage en un flux lumineux capté par la caméra et un flux lumineux capté par la caméra,
- une base de données contenant, pour chaque zone de visage, un modèle de vérité basé sur des valeurs de caractéristiques de texture de référence, sur des valeurs de coefficients 'b' de référence et sur des corrélations entre ces éléments,
- une unité de traitement, comportant:
- des moyens de différence prévus pour calculer une image de différence résultant de la différence entre l'image parallèle et l'image orthogonale,
- des moyens de filtrage prévus pour générer une image filtrée par filtrage de l'image de différence par paquets d'ondelettes sur 5 niveaux, en supprimant les niveaux "low" résolution, 1 et 5,
- des moyens de découpage prévus pour découper l'image filtrée en trois sous-images filtrées, la première correspondant au front, la deuxième correspondant au nez et la troisième correspondant aux joues,
- des moyens de transformation prévus pour réaliser une transformée de Fourier ou une transformée en cosinus discrète en projection cumulative radiale, en sommant les énergies appartenant à la même couronne fréquentielle, et
- des moyens de modélisation prévus pour modéliser le profil de décroissance des fréquences sous la forme d'un modèle de type puissance (a.x^b+c),
- des moyens d'extraction prévus pour extraire de l'image filtrée et de chacune des sous-images filtrées, des caractéristiques de texture relatives aux spécularités de la surface du visage,
- des moyens d'analyse prévus pour analyser, pour chaque zone du visage, le coefficient 'b' calculé par les moyens de traitement et les caractéristiques de texture extraites par les moyens d'extraction par rapport au modèle de vérité correspondant à ladite zone du visage, issu de l'apprentissage et stocké dans la base de données, et
- des moyens de prise de décision prévus pour prendre une décision concernant la véracité du visage à partir d'une information fournie par les moyens d'analyse.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un dispositif de détection d'un vrai visage selon l'invention, et
la Fig. 2 est un algorithme d'un procédé de détection d'un vrai visage selon l'invention.

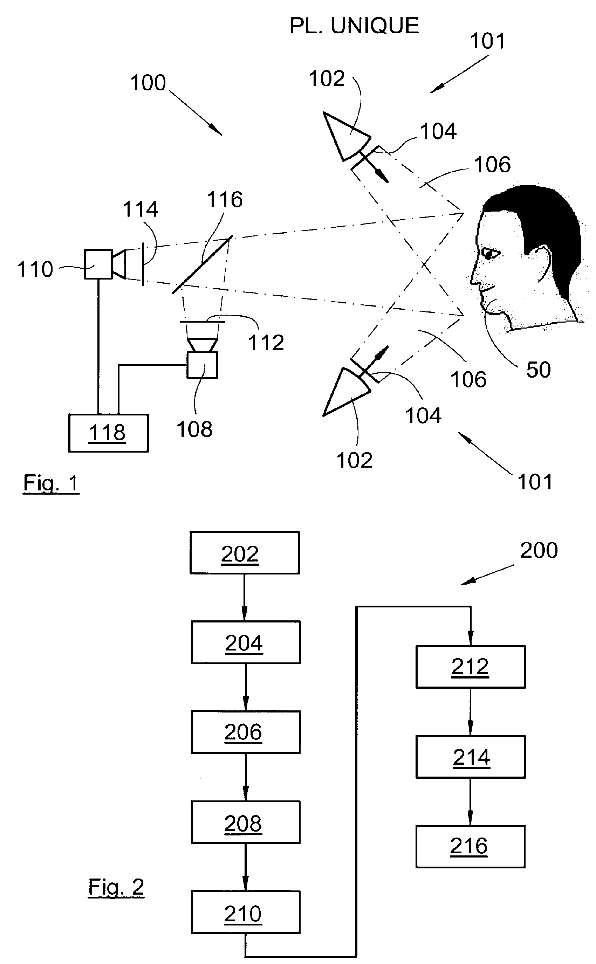

La Fig. 1 montre un dispositif de détection 100 destiné à détecter si le visage 50 qui est présent devant lui est vrai ou faux.

Le dispositif de détection 100 comprend au moins un moyen d'éclairement 101.

Pour obtenir un meilleur éclairement du visage 50 et limiter les zones d'ombres, il y a deux moyens d'éclairement 101 disposés de part et d'autre du visage 50.

Chaque moyen d'éclairement 101 comporte une source infrarouge 102 et un polariseur 104 permettant l'émission d'un flux infrarouge polarisé 106 selon une direction de polarisation. Le flux infrarouge polarisé 106 éclaire le visage 50.

Le dispositif de détection 100 comprend également deux caméras 108 et 110. Les deux caméras 108 et 110 sont calibrées pour que les images obtenues par les deux caméras 108 et 110 soient de même intensité. Une autre solution consiste à normaliser les images capturées.

La caméra 108 présente un filtre 112 polarisant orthogonalement à la direction de polarisation et la caméra 110 présente un filtre 114 polarisant parallèlement à la direction de polarisation.

Le dispositif de détection 100 comprend également une lame séparatrice 116 placée entre le visage 50 et les deux caméras 108 et 110. La lame séparatrice 116 permet de diviser le flux lumineux provenant du visage 50 en deux flux lumineux, l'un des flux lumineux étant capté par la caméra 108 à travers le filtre polarisant orthogonal 112, et l'autre flux lumineux étant capté par la caméra 110 à travers le filtre polarisant parallèle 114.

Le dispositif de détection 100 comprend également une unité de traitement 118 destinée à traiter les images qu'elle reçoit des caméras 108 et 110.

Le principe de l'invention repose sur le fait qu'un flux infrarouge polarisé incident 106 qui rencontre un visage 50 engendre la création de trois flux infrarouges différents.

Il y a un premier flux lumineux issu de la réflexion spéculaire qui est une réflexion directe en surface de la peau et qui prend la forme d'un flux infrarouge présentant une polarisation parallèle à celle du flux infrarouge incident 106.

Il y a un deuxième flux lumineux issu de la diffusion en surface de la peau. La diffusion en surface prend la forme d'un flux infrarouge incohérent incluant des polarisations orthogonales et parallèles.

Il y a un troisième flux lumineux issu de la diffusion en profondeur dans les couches de la peau. Cette diffusion est une diffusion homogène et lambertienne incluant également les polarisations orthogonales et parallèles.

L'image capturée par la caméra 108 présentant le filtre 112 polarisant orthogonal est appelée "image orthogonale" et l'image capturée par la caméra 110 présentant le filtre 114 polarisant parallèle est appelée "image parallèle".

Chaque caméra 108, 110 est orientée de manière à pouvoir capturer au moins une image du visage 50 éclairée par les moyens d'éclairement 101.

L'image orthogonale est représentative du flux infrarouge résultant de la diffusion en surface et de la diffusion en profondeur, mais pas de la réflexion spéculaire.

L'image parallèle est représentative du flux infrarouge résultant de la diffusion en surface, de la diffusion en profondeur et de la réflexion spéculaire.

Ainsi une image de différence résultant de la différence entre l'image parallèle et l'image orthogonale est représentative uniquement du flux infrarouge résultant de la réflexion spéculaire et donc des spécularités du matériau constituant le visage 50.

La polarisation du flux lumineux et le calcul de la différence entre l'image parallèle et l'image orthogonale permettent d'améliorer le rapport signal-bruit des spécularités en supprimant la partie profonde et locale de surface. Il est donc possible d'analyser précisément les formes et les répartitions spatiales des spécularités, sans être pollué par la diffusion locale de surface et la composante diffuse profonde.

La réflexion spéculaire est caractéristique des propriétés optiques de la surface réfléchissante (peau ou leurre) et du relief local de la surface réfléchissante (lisse ou présentant un relief spécifique). Une analyse des caractéristiques morphologiques et fréquentielles des spécularités (leur texture) peut alors être effectuée pour vérifier qu'elles sont compatibles avec celles d'une vraie peau. Chaque minuscule bosse de la peau va présenter une spécularité importante à son sommet (point lumineux localement), chaque creux (pore de la peau) va présenter une spécularité moindre. Les caractéristiques de distribution de ces spécularités (texture des spécularités) sont donc une mesure de l'image du relief qui doit correspondre à celui attendu pour une vraie peau.

Une analyse des caractéristiques de texture des spécularités permet alors de distinguer un vrai visage d'un faux visage car les caractéristiques de texture des spécularités de la peau sont différentes des matériaux utilisés pour faire des leurres.

Par exemple, lorsque le visage 50 est un leurre constitué d'un matériau non diffusant et non pénétrant pour l'infrarouge (plastiques durs, papier, impression textile, vidéo sur un écran smartphone, PC, ... ), la diffusion en couches profondes n'existe pas et les caractéristiques de texture des spécularités relevées sur l'image de différence sont celles du matériau constituant le leurre, et ces caractéristiques de texture des spécularités ne correspondent pas aux caractéristiques de texture des spécularités de la peau.

Par exemple, lorsque le visage 50 est un leurre constitué d'un matériau pénétrant et/ou diffusant pour l'infrarouge (élastomère, cire, papier), les caractéristiques de texture des spécularités relevées sur l'image de différence sont relativement uniformes sur l'ensemble de l'image de différence.

Les spécularités de la peau sont variables selon la partie du visage, en particulier les spécularités du front, les spécularités des joues et les spécularités du nez sont différentes, il est donc intéressant de faire une comparaison des caractéristiques de la texture des spécularités pour chacune de ces parties.

Pour comparer les caractéristiques de la texture des spécularités relevées sur l'image de différence avec les caractéristiques de la texture des spécularités de la peau véritable, c'est-à-dire un vrai visage, il faut avoir des caractéristiques de la texture des spécularités de référence auxquelles les comparer.

A l'aide du dispositif de détection 100, une image parallèle et une image orthogonale sont prises pour chaque visage 50 d'un ensemble regroupant des vrais visages et des faux visages.

L'image de différence est alors calculée par différence entre l'image parallèle et l'image orthogonale.

L'image de différence subit alors un traitement qui permet l'obtention d'une image dite filtrée et qui consiste successivement en:
- un filtrage par paquets d'ondelettes sur 5 niveaux,
- une suppression des niveaux "low" résolution et 1 dans le but de supprimer les défauts d'uniformité de l'éclairage, et la suppression du niveau 5 dans le but d'atténuer le bruit.

L'image filtrée est ensuite découpée en trois sous-images filtrées, l'une pour le front, l'une pour le nez et l'une pour les joues.

L'image filtrée et chaque sous-image filtrée subissent alors:
- une transformée de Fourier ou une transformée en cosinus discrète ou TCD (de l'anglais: DCT ou Discrete Cosine Transform) en projection cumulative radiale, en sommant les énergies appartenant à la même couronne fréquentielle, dans le but de définir un profil de décroissance des fréquences, et
- une modélisation de manière robuste du profil de décroissance des fréquences sous la forme d'un modèle de type puissance (a.x^b+c) par une méthode non linéaire de moindres carrés robuste, et où le coefficient 'b' est alors caractéristique de la décroissance des fréquences.

Pour l'image filtrée et chaque sous-image filtrée, un coefficient 'b' est obtenu.

De l'image filtrée et de chaque sous-image filtrée, sont extraites des caractéristiques de texture des spécularités relatives au visage 50, comme cela est décrit dans les documents suivants:
- "Evaluation of Texture Features for Content-Based Image Retrieval", par Peter Howarth et Stefan Rüger, ou
- "Textural features corresponding to visual perception" par Tamura H., Mori S., Yamawaki T. (IEEE Trans on Systems, Man and Cybernetics 8 (1978) 460-472).

A titre d'exemple, les caractéristiques de texture peuvent être: la granularité ("coarseness" en Anglais), le contraste, la directivité ("directionality" en Anglais), la linéarité ("line-likeness" en Anglais), la régularité, la rugosité, la cooccurrence, tamura, les filtres de Gabor, bloblikeness, l'homogénéité, la douceur, la variance, l'entropie...

On obtient ainsi pour chaque vrai visage et faux visage:
- pour l'image filtrée, c'est-à-dire pour le visage complet, des caractéristiques de texture de référence et un coefficient 'b' de référence qui sont associés au visage, et
- pour chaque sous-image filtrée, c'est-à-dire pour une zone spécifique du visage, des caractéristiques de texture de référence et un coefficient 'b' de référence qui sont associés à la zone correspondante du visage.

A partir de ces éléments (caractéristiques de texture, coefficient 'b', zone de visage) de référence, il est possible d'initialiser un système d'apprentissage tel qu'une machine à vecteurs de support (en anglais Support Vector Machine, SVM), un réseau de neurones ou une combinaison de plusieurs méthodes d'apprentissage, en introduisant les caractéristiques des textures des spécularités de référence, les coefficients 'b' de référence et la zone du visage associée (tout le visage, ou une partie du visage), avec le caractère vrai ou faux du visage correspondant en entrée d'un système d'apprentissage.

Cet apprentissage permet de créer pour chaque zone de visage (c'est-à-dire pour l'image filtrée, et chaque sous-image filtrée), un modèle de vérité basé sur les valeurs de chaque caractéristique de texture de référence, sur les valeurs des coefficients 'b' de référence associés à ladite zone du visage et sur les corrélations entre ces éléments. La comparaison des jeux de valeurs issus des éléments d'un visage à analyser avec le modèle de vérité précédemment obtenu permettra de décider si le visage est vrai ou faux.

Selon un mode de réalisation de l'invention, avec ces éléments et dans un espace à N dimensions, le système d'apprentissage définit des zones de l'espace correspondant à de vrais visages et des zones de l'espace correspondant à de faux visages, où chaque caractéristique de texture, le coefficient 'b', et la zone du visage constituent chacun une desdites N dimensions. Chacun de ces éléments est donc une coordonnée dans cet espace.

Dans une analyse ultérieure, les caractéristiques de texture, le coefficient 'b' et la zone du visage d'un visage à analyser définissent un point dudit espace. La décision est prise par des moyens de prise de décision en se basant sur le modèle de vérité issu de l'apprentissage selon que le point se situe dans une zone correspondant à de vrais visages ou une zone correspondant à de faux visages.

Les modèles de vérité sont rassemblés dans une base de données du dispositif de détection 100.

La Fig. 2 montre un algorithme d'un procédé de détection 200 destiné à déterminer si le visage 50 présent devant le dispositif de détection 100 est un vrai visage ou non.

Le procédé de détection 200 comporte:
- une étape de capture 202 au cours de laquelle une image parallèle du visage 50 éclairée par le moyen d'éclairement 101 est capturée par la caméra 110, et une image orthogonale du visage 50 éclairée par le moyen d'éclairement 101 est capturée par la caméra 108,
- une étape de différence 204 au cours de laquelle l'unité de traitement 118 calcule une image de différence résultant de la différence entre l'image parallèle et l'image orthogonale ainsi capturées,
- une étape de filtrage 206 au cours de laquelle l'unité de traitement 118 génère une image dite filtrée en filtrant ladite image de différence par paquets d'ondelettes sur 5 niveaux, en supprimant, d'une part, les niveaux "low" résolution et 1 dans le but de supprimer les défauts d'uniformité de l'éclairage, et, d'autre part, le niveau 5 dans le but d'atténuer le bruit,
- une étape de découpage 208 au cours de laquelle l'unité de traitement 118 découpe l'image ainsi filtrée en trois sous-images filtrées, la première sous-image filtrée correspondant au front, la deuxième sous-image filtrée correspondant au nez et la troisième sous-image filtrée correspondant aux joues,
- une étape de traitement 210 au cours de laquelle l'unité de traitement 118 soumet l'image filtrée et chacune des sous-images filtrées à un traitement propre à révéler les spécularités de la surface du visage 50 qui consiste en:
   ∘ une transformation de Fourier ou une transformée en cosinus discrète ou TCD (de l'anglais: DCT ou Discrete Cosine Transform) en projection cumulative radiale, en sommant les énergies appartenant à la même couronne fréquentielle, dans le but de définir un profil de décroissance des fréquences, et
   ∘ une modélisation au cours de laquelle le profil de décroissance des fréquences est modélisé sous la forme d'un modèle de type puissance (a.x^b+c) par une méthode non linéaire de moindres carrés robuste, et où le coefficient 'b' est alors caractéristique de la décroissance des fréquences,
- une étape d'extraction 212 au cours de laquelle l'unité de traitement 118 extrait de l'image filtrée et de chacune des sous-images filtrées, des caractéristiques de texture relatives aux spécularités de la surface du visage 50,
- une étape d'analyse 214 au cours de laquelle l'unité de traitement 118 analyse, pour chaque zone du visage, le coefficient 'b' ainsi calculé et les caractéristiques de texture ainsi extraites par rapport au modèle de vérité correspondant à ladite zone du visage, et
- une étape de prise de décision 216 au cours de laquelle l'unité de traitement 118 prend une décision concernant la véracité du visage 50 à partir du résultat de l'étape d'analyse 214.

L'étape de découpage 208 est effectuée sur la base de l'image de différence par analyse et détection des parties du visage par exemple à l'aide d'un logiciel dit de "tracking" comme cela est présenté dans le document de C. Herold, V. Despiegel, S. Gentric, S. Dubuisson, I. Bloch sous le titre "Signal and image processing for biometrics" au chapitre "Modeling, reconstruction and tracking for face recognition" aux pages 57-88 (A. Nait-Ali Ed., ISTE-Wiley). Après détection de chacune des parties (nez, front, joues), l'image de différence est découpée autour des parties ainsi détectées.

L'étape d'extraction 212 consiste à calculer les différentes caractéristiques de texture relatives aux spécularités, comme cela est mentionné ci-dessus.

L'unité de traitement 118 comporte:
- des moyens de différence prévus pour calculer l'image de différence par différence entre l'image parallèle et l'image orthogonale,
- des moyens de filtrage prévus pour générer une image filtrée par filtrage de l'image de différence par paquets d'ondelettes sur 5 niveaux, en supprimant les niveaux "low" résolution, 1 et 5,
- des moyens de découpage prévus pour découper l'image filtrée en trois sous-images filtrées, la première sous-image filtrée correspondant au front, la deuxième sous-image filtrée correspondant au nez et la troisième sous-image filtrée correspondant aux joues,
- des moyens de traitement pour effectuer sur l'image filtrée et chacune des sous-images filtrées, un traitement propre à révéler les spécularités de la surface du visage 50, et comportant des moyens de transformation prévus pour réaliser une transformée de Fourier ou une transformée en cosinus discrète en projection cumulative radiale, en sommant les énergies appartenant à la même couronne fréquentielle, et des moyens de modélisation prévus pour modéliser le profil de décroissance des fréquences sous la forme d'un modèle de type puissance (a.x^b+c) par une méthode non linéaire de moindres carrés robuste,
- des moyens d'extraction prévus pour extraire de l'image filtrée et de chacune des sous-images filtrées, des caractéristiques de texture relatives aux spécularités de la surface du visage 50,
- des moyens d'analyse prévus pour analyser, pour chaque zone du visage, le coefficient 'b' calculé par les moyens de traitement et les caractéristiques de texture extraites par les moyens d'extraction par rapport au modèle de vérité correspondant à ladite zone du visage, issu de l'apprentissage et stocké dans la base de données, et
- des moyens de prise de décision prévus pour prendre une décision concernant la véracité du visage 50 à partir d'une information fournie par les moyens d'analyse.

Bien entendu, la présente invention n'est pas limitée aux exemples et modes de réalisation décrits et représentés, mais elle est susceptible de nombreuses variantes accessibles à l'homme de l'art, relevant de la définition des Revendications.

## Revendications

1. Procédé de détection (200) d'un vrai visage (50) par un dispositif de détection (100) comportant au moins un moyen d'éclairement (101) émettant un flux infrarouge polarisé selon une direction de polarisation, une caméra (108) présentant un filtre (112) polarisant orthogonalement à la direction de polarisation et une caméra (110) présentant un filtre (114) polarisant parallèlement à la direction de polarisation, une lame séparatrice (116) placée entre le visage (50) et les deux caméras (108, 110) et destinée à diviser le flux lumineux provenant du visage (50) en un flux lumineux capté par la caméra (108) et un flux lumineux capté par la caméra (110), une unité de traitement (118) et une base de données contenant, pour chaque zone de visage, un modèle de vérité basé sur des valeurs de caractéristiques de texture de référence, sur des valeurs de coefficients 'b' de référence et sur des corrélations entre ces éléments, ledit procédé de détection (200) comportant:
- une étape de capture (202) au cours de laquelle une image parallèle du visage (50) éclairée par le moyen d'éclairement (101) est capturée par la caméra (110), et une image orthogonale du visage (50) éclairée par le moyen d'éclairement (101) est capturée par la caméra (108),
- une étape de différence (204) au cours de laquelle l'unité de traitement (118) calcule une image de différence résultant de la différence entre l'image parallèle et l'image orthogonale ainsi capturées,
- une étape de filtrage (206) au cours de laquelle l'unité de traitement (118) génère une image dite filtrée en filtrant ladite image de différence par paquets d'ondelettes sur 5 niveaux, en supprimant les niveaux "low" résolution, 1 et 5,
- une étape de découpage (208) au cours de laquelle l'unité de traitement (118) découpe l'image ainsi filtrée en trois sous-images filtrées, la première correspondant au front, la deuxième correspondant au nez et la troisième correspondant aux joues,
- une étape de traitement (210) au cours de laquelle l'unité de traitement (118) soumet l'image filtrée et chacune des sous-images filtrées à un traitement consistant en:
o une transformation de Fourier ou une transformée en cosinus discrète en projection cumulative radiale, en sommant les énergies appartenant à la même couronne fréquentielle, dans le but de définir un profil de décroissance des fréquences, et
∘ une modélisation au cours de laquelle le profil de décroissance des fréquences est modélisé sous la forme d'un modèle de type puissance (a.x^b+c),
- une étape d'extraction (212) au cours de laquelle l'unité de traitement (118) extrait de l'image filtrée et de chacune des sous-images filtrées, des caractéristiques de texture relatives aux spécularités de la surface du visage (50),
- une étape d'analyse (214) au cours de laquelle l'unité de traitement (118) analyse, pour chaque zone du visage, le coefficient 'b' ainsi calculé et les caractéristiques de texture ainsi extraites par rapport au modèle de vérité correspondant à ladite zone du visage, et
- une étape de prise de décision (216) au cours de laquelle l'unité de traitement (118) prend une décision concernant la véracité du visage (50) à partir du résultat de l'étape d'analyse (214).

2. Dispositif de détection (100) comportant:
- au moins un moyen d'éclairement (101) émettant un flux infrarouge polarisé selon une direction de polarisation,
- une caméra (108) présentant un filtre (112) polarisant orthogonalement à la direction de polarisation,
- une caméra (110) présentant un filtre (114) polarisant parallèlement à la direction de polarisation,
- une lame séparatrice (116) placée entre le visage (50) et les deux caméras (108, 110) et destinée à diviser le flux lumineux provenant du visage (50) en un flux lumineux capté par la caméra (108) et un flux lumineux capté par la caméra (110),
- une base de données contenant, pour chaque zone de visage, un modèle de vérité basé sur des valeurs de caractéristiques de texture de référence, sur des valeurs de coefficients 'b' de référence et sur des corrélations entre ces éléments,
- une unité de traitement (118), comportant:
- des moyens de différence prévus pour calculer une image de différence résultant de la différence entre l'image parallèle et l'image orthogonale,
- des moyens de filtrage prévus pour générer une image filtrée par filtrage de l'image de différence par paquets d'ondelettes sur 5 niveaux, en supprimant les niveaux "low" résolution, 1 et 5,
- des moyens de découpage prévus pour découper l'image filtrée en trois sous-images filtrées, la première correspondant au front, la deuxième correspondant au nez et la troisième correspondant aux joues,
- des moyens de transformation prévus pour réaliser une transformée de Fourier ou une transformée en cosinus discrète en projection cumulative radiale, en sommant les énergies appartenant à la même couronne fréquentielle, et
- des moyens de modélisation prévus pour modéliser le profil de décroissance des fréquences sous la forme d'un modèle de type puissance (a.x^b+c),
- des moyens d'extraction prévus pour extraire de l'image filtrée et de chacune des sous-images filtrées, des caractéristiques de texture relatives aux spécularités de la surface du visage (50),
- des moyens d'analyse prévus pour analyser, pour chaque zone du visage, le coefficient 'b' calculé par les moyens de traitement et les caractéristiques de texture extraites par les moyens d'extraction par rapport au modèle de vérité correspondant à ladite zone du visage, issu de l'apprentissage et stocké dans la base de données, et
- des moyens de prise de décision prévus pour prendre une décision concernant la véracité du visage (50) à partir d'une information fournie par les moyens d'analyse.

## Patentansprüche

1. Verfahren (200) zum Detektieren eines wahren Gesichts (50) durch eine Detektionsvorrichtung (100), die wenigstens ein Beleuchtungsmittel (101), das einen Infrarotstrom, der längs einer Polarisationsrichtung polarisiert ist, aussendet, eine Kamera (108), die einen Filter (112) aufweist, der senkrecht zu der Polarisationsrichtung polarisiert, und eine Kamera (110), die einen Filter (114) aufweist, der parallel zu der Polarisationsrichtung polarisiert, ein Trennplättchen (116), das zwischen dem Gesicht (50) und den zwei Kameras (108, 110) angeordnet ist und dazu bestimmt ist, die Lichtströme, die von dem Gesicht (50) ausgehen, in einen durch die Kamera (108) aufgenommenen Lichtstrom und in einen durch die Kamera (110) aufgenommenen Lichtstrom zu unterteilen, eine Verarbeitungseinheit (118) und eine Datenbank, die für jede Gesichtszone ein Wahrheitsmodell, das auf Werten von Eigenschaften einer Referenztextur, auf Werten von Referenzkoeffizienten "b" und auf Korrelationen zwischen diesen Elementen beruht, umfasst, wobei das Detektionsverfahren (200) Folgendes umfasst:
- einen Aufnahmeschritt (202), in dessen Verlauf ein Bild parallel zu dem Gesicht (50), das von dem Beleuchtungsmittel (101) beleuchtet wird, durch die Kamera (110) aufgenommen wird und ein Bild senkrecht zu dem Gesicht (50), das von dem Beleuchtungsmittel (101) beleuchtet wird, durch die Kamera (108) aufgenommen wird,
- einen Differenzschritt (204), in dessen Verlauf die Verarbeitungseinheit (118) ein Differenzbild berechnet, das sich aus der Differenz zwischen dem parallelen Bild und dem senkrechten Bild, die auf diese Weise aufgenommen worden sind, ergibt,
- einen Filterungsschritt (206), in dessen Verlauf die Verarbeitungseinheit (118) ein sogenanntes gefiltertes Bild erzeugt, in dem das Differenzbild durch Wavelet-Pakete auf 5 Ebenen mit Unterdrückung der Ebenen 1 und 5 mit "niedriger" Auflösung gefiltert wird,
- einen Schneideschritt (208), in dessen Verlauf die Verarbeitungseinheit (108) das auf diese Weise gefilterte Bild in drei gefilterte Unterbilder zerschneidet, wovon das erste der Stirn, das zweite der Nase und das dritte den Wangen entspricht,
- einen Verarbeitungsschritt (210), in dessen Verlauf die Verarbeitungseinheit (118) das gefilterte Bild und jedes der gefilterten Unterbilder einer Verarbeitung unterwirft, die besteht aus:
• einer Fourier-Transformation oder einer diskreten Kosinus-Transformation mit radialer kumulativer Projektion, wobei die Energien, die zu demselben Frequenzkranz gehören, summiert werden, um ein Frequenzabnahmeprofil zu definieren, und
• einer Modellierung, in deren Verlauf das Frequenzabnahmeprofil in Form eines Modells des Potenztyps (a · x^{b} + c) modelliert wird,
- einen Extraktionsschritt (212), in dessen Verlauf die Verarbeitungseinheit (118) aus dem gefilterten Bild und jedem der gefilterten Unterbilder Textureigenschaften extrahiert, die auf glänzende Stellen der Oberfläche des Gesichts (50) bezogen sind, extrahiert,
- einen Analyseschritt (214), in dessen Verlauf die Verarbeitungseinheit (118) für jede Zone des Gesichts den auf diese Weise berechneten Koeffizienten "b" und die auf diese Weise extrahierten Textureigenschaften in Bezug auf das Wahrheitsmodell, das der Zone des Gesichts entspricht, analysiert, und
- einen Entscheidungsschritt (216), in dessen Verlauf die Verarbeitungseinheit (118) eine Entscheidung, die den Wahrheitsgehalt des Gesichts (50) betrifft, anhand des Ergebnisses des Analyseschrittes (214) trifft.

2. Detektionsvorrichtung (100), die Folgendes umfasst:
- wenigstens ein Beleuchtungsmittel (101), das einen Infrarotstrom aussendet, der in einer Polarisationsrichtung polarisiert ist,
- eine Kamera (108), die einen Filter (112) aufweist, der senkrecht zu der Polarisationsrichtung polarisiert,
- eine Kamera (110), die einen Filter (114) aufweist, der parallel zu der Polarisationsrichtung polarisiert,
- ein Trennplättchen (116), das zwischen dem Gesicht (50) und den zwei Kameras (108, 110) angeordnet ist und dazu bestimmt ist, den Lichtstrom, der von dem Gesicht (50) stammt, in einen Lichtstrom, der durch die Kamera (108) aufgenommen wird, und in einen Lichtstrom, der durch die Kamera (110) aufgenommen wird, zu unterteilen,
- eine Datenbank, die für jede Gesichtszone ein Wahrheitsmodell enthält, das auf Werten von Eigenschaften einer Referenztextur, auf Werten von Referenzkoeffizienten "b" und auf Korrelationen zwischen diesen Elementen beruht,
- eine Verarbeitungseinheit (118), die Folgendes enthält:
- Differenzmittel, die vorgesehen sind, um ein Differenzbild zu berechnen, das sich aus der Differenz zwischen dem parallelen Bild und dem senkrechten Bild ergibt,
- Filterungsmittel, die vorgesehen sind, um ein gefiltertes Bild durch Filtern des Differenzbildes durch Wavelet-Pakete auf fünf Ebenen mit Unterdrückung der Ebenen 1 und 5 mit "niedriger" Auflösung zu erzeugen,
- Schneidemittel, die vorgesehen sind, das gefilterte Bild in drei gefilterte Unterbilder zu zerschneiden, wovon das erste der Stirn, das zweite der Nase und das dritte den Wangen entspricht,
- Transformationsmittel, die vorgesehen sind, um eine Fourier-Transformation oder eine diskrete Kosinus-Transformation mit radialer kumulativer Projektion zu verwirklichen, indem die Energien, die zu demselben Frequenzkranz gehören, summiert werden, und
- Modellierungsmittel, die vorgesehen sind, um das Frequenzabnahmeprofil in Form eines Modells des Potenztyps (a · x^{b} + c) zu modellieren,
- Extraktionsmittel, die vorgesehen sind, um aus dem gefilterten Bild und jedem der gefilterten Unterbilder Textureigenschaften zu extrahieren, die auf glänzende Stellen der Oberfläche des Gesichts (50) bezogen sind,
- Analysemittel, die vorgesehen sind, um für jede Zone des Gesichts den durch die Verarbeitungsmittel berechneten Koeffizienten "b" und die Textureigenschaften, die von den Extraktionsmitteln extrahiert werden, in Bezug auf das Wahrheitsmodell, das der Zone des Gesichts entspricht, das durch Lernen erhalten wird und in der Datenbank gespeichert ist, zu analysieren, und
- Entscheidungsmittel, die vorgesehen sind, um eine Entscheidung, die den Wahrheitsgehalt des Gesichts (50) betrifft, anhand von Informationen, die von den Analysemitteln geliefert werden, zu treffen.

## Claims

1. Method (200) for detecting a true face (50) by a detection device (100) comprising at least one illumination means (101) emitting an infrared flow polarised in a polarisation direction, a camera (108) having a filter (112) polarising orthogonally to the polarisation direction and a camera (110) having a filter (114) polarising parallel to the polarisation direction, a splitter blade (116) placed between the face (50) and the two cameras (108, 110) and intended to divide the light flow coming from the face (50) into a light flow captured by the camera (108) and a light flow captured by the camera (110), a processing unit (118) and a database containing, for each face region, a truth model based on reference texture characteristic values, on reference coefficient values "b" and on correlations between these elements, said detection method (200) comprising:
- a capture step (202) during which a parallel image of the face (50) illuminated by the illumination means (101) is captured by the camera (110), and an orthogonal image of the face (50) illuminated by the illumination means (101) is captured by the camera (108),
- a difference step (204) during which the processing unit (118) computes a difference image resulting from the difference between the parallel image and the orthogonal image thus captured,
- a filtering step (206) during which the processing unit (118) generates a so-called filtered image by filtering said difference image in wavelet packets on 5 levels, eliminating the "low" resolution levels, 1 and 5,
- a division step (208) during which the processing unit (118) divides the image thus filtered into three filtered sub-images, the first corresponding to the forehead, the second corresponding to the nose and the third corresponding to the cheeks,
- a processing step (210) during which said processing unit (118) subjects the filtered image and each of the filtered sub-images to a process consisting of:
∘ a Fourier transformation or a discreet cosine transformation in radial cumulative projection, by summing the energies belonging to the same frequency ring, for the purpose of defining a frequency decrease profile, and
∘ a modelling during which the frequency decrease profile is modelled in the form of a model of the power type (a.x^b+c),
- an extraction step (212) during which the processing unit (118) extracts, from the filtered image and each of the filtered sub-images, texture characteristics relating to the specularities of the surface of the face (50),
- an analysis step (214) during which the processing unit (118) analyses, for each region of the face, the coefficient "b" thus calculated and the texture characteristics thus extracted compared with the truth model corresponding to said region of the face, and
- a decision-taking step (216) during which the processing unit (118) takes the decision concerning the veracity of the face (50) from the result of the analysis step (214).

2. Detection device (100) comprising:
- at least one illumination means (101) emitting an infrared flow polarised in a polarisation direction,
- a camera (108) having a filter (112) polarising orthogonally to the polarisation direction,
- a camera (110) having a filter (114) polarising parallel to the polarisation direction,
- a splitter blade (116) placed between the face (50) and the two cameras (108, 110) and intended to divide the light flow coming from the face (50) into a light flow captured by the camera (108) and a light flow captured by the camera (110),
- a database containing, for each face region, a truth model based on reference texture characteristic values, on reference coefficient "b" values and on correlations between these elements,
- a processing unit (118) comprising:
- difference means provided for calculating a difference image resulting from the difference between the parallel image and the orthogonal image,
- filtering means provided for generating a filtered image by filtering the difference image in wavelet packets on 5 levels, eliminating the "low" resolution levels, 1 and 5,
- division means provided for dividing the filtered image into three filtered sub-images, the first corresponding to the forehead, the second corresponding to the nose and the third corresponding to the cheeks,
- transformation means provided for producing a Fourier transform or a discreet cosine transform in radial cumulative projection, by summing the energies belonging to the same frequency ring, and
- modelling means provided for modelling the frequency decrease profile in the form of a model of the power type (a.x^b+c),
- extraction means provided for extracting, from the filtered image and each of the filtered sub-images, texture characteristics relating to the specularities of the surface of the face (50),
- analysis means provided for analysing, for each region of the face, the coefficient "b" calculated by the processing means and the texture characteristics extracted by the extraction means compared with the truth model corresponding to said region of the face, issuing from the learning and stored in the database, and
- decision-taking means provided for taking a decision concerning the veracity of the face (50) from information supplied by the analysis means.
